(19) Europäisches Patentamt / European Patent Office / Office européen des brevets

(11) **EP 2 186 188 B1**

(12) **EUROPÄISCHE PATENTSCHRIFT**

(45) Veröffentlichungstag und Bekanntmachung des Hinweises auf die Patenterteilung:
**12.10.2011 Patentblatt 2011/41**

(21) Anmeldenummer: **08787274.3**

(22) Anmeldetag: **15.08.2008**

(51) Int Cl.:
**H02P 9/14** *(2006.01)*      **H02P 9/30** *(2006.01)*

(86) Internationale Anmeldenummer:
**PCT/EP2008/060746**

(87) Internationale Veröffentlichungsnummer:
**WO 2009/033912 (19.03.2009 Gazette 2009/12)**

(54) **VERFAHREN UND VORRICHTUNG ZUM BESTIMMEN EINES ERREGERSTROMS IN BÜRSTENLOSEN ELEKTRISCHEN MASCHINEN**

METHOD AND APPARATUS FOR DETERMINING A FIELD CURRENT IN BRUSHLESS ELECTRICAL MACHINES

PROCÉDÉ ET DISPOSITIF POUR DÉTERMINER UN COURANT D'EXCITATION DANS DES MACHINES ÉLECTRIQUES SANS BALAIS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.09.2007 US 971406 P**

(43) Veröffentlichungstag der Anmeldung:
**19.05.2010 Patentblatt 2010/20**

(73) Patentinhaber: **ABB Schweiz AG**
**5400 Baden (CH)**

(72) Erfinder: **ECKERLE, John**
**CH-4058 Basel (CH)**

(74) Vertreter: **ABB Patent Attorneys**
**C/o ABB Schweiz AG**
**Intellectual Property (CH-LC/IP)**
**Brown Boveri Strasse 6**
**CH-5400 Baden (CH)**

(56) Entgegenhaltungen:
**WO-A-2004/082105      DE-A1- 3 120 797**
**JP-A- 4 058 799        US-A- 5 920 162**

## Beschreibung

### Technisches Gebiet

Die Erfindung betrifft bürstenlose elektrische Maschinen mit Erregerwicklungen sowie Verfahren zum Betreiben derartiger Maschinen.

### Stand der Technik

Bürstenlose elektrische Maschinen wie z.B. Synchronmotoren können neben einer Statorwicklung auch eine am Läufer angeordnete Erregerwicklung aufweisen. Die Erregerwicklung muss mit elektrischer Energie versorgt werden, um ein Erregermagnetfeld zu erzeugen. Die elektrische Energie wird den Erregerwicklungen durch eine transformatorische Kopplung zwischen einer oder mehreren Primärspulen an dem Stator zu einer oder mehreren Sekundärspulen an dem Läufer bereitgestellt. Der aus Primärspulen und Sekundärspulen gebildete Erregertransformator kann, z.B. axial, versetzt an einer Achse einer rotatorischen elektrischen Maschine angeordnet sein. In anderen Fällen kann auch die Statorwicklung als Primärspule des Erregertransformators genutzt werden.

Der Erregertransformator umfasst eine Erregerstatorwicklung als Primärspule und eine Erregerläuferwicklung als Sekundärspule. Die Erregerläuferwicklung ist über eine Diodengleichrichterbrücke mit der Erregerwicklung verbunden. Dadurch wird der Erregerwicklung ein elektrischer Gleichstrom, der Erregerstrom, bereitgestellt, der das Erregermagnetfeld erzeugt.

Zum definierten Betrieb einer derartigen elektrischen Maschine, z.B. zum Einstellen eines bestimmten Drehmoments, ist es jedoch notwendig, den Erregerstrom durch die Erregerwicklung zu bestimmen und bei Bedarf zu regeln, um die Stärke des durch die Erregerwicklung bewirkten Magnetfeldes ermitteln zu können. Da die elektrische Maschine läuferseitig keinen Abgriff für Ströme aufweist und auch in sonstiger Weise keine zuverlässige Strommessung zulässt, ist es notwendig, den Erregerstrom durch Messungen elektrischer Größen auf der Statorseite zu schätzen.

Bisherige Schätzverfahren basieren auf einer Messung zweier Phasenströme und zweier verkettete Ausgangsspannung des Stellgliedes mit einer hohen Zeitauflösung, die aufwändig umgesetzt werden muss. Die Ausgangsspannung des Stellgliedes ist zudem eine nichtsinusförmige Spannung, wodurch der Rechenaufwand bei der Auswertung für die Bestimmung des Erregerstroms aufwändig ist.

In der JP 04 058799 A ist ein gattungsgemässes Verfahren zum Ermitteln eines Erregerstromes in einer elektrischen Maschine angegeben. Darüber hinaus ist in der WO 2004/082105 A1 ein Verfahren zur Abschätzung eines Feldstromes in einer bürstenlosen elektrischen Maschine offenbart.

### Darstellung der Erfindung

Es ist Aufgabe der vorliegenden Erfindung, ein Verfahren und eine Vorrichtung zur Verfügung stellen, mit denen der Erregerstrom zuverlässig und genau lediglich anhand der Messung einer statorseitig gemessenen, elektrischen Größe zu bestimmen. Diese Aufgabe wird durch das Verfahren zum Ermitteln eines Erregerstroms einer elektrischen Maschine gemäß Anspruch 1 sowie durch eine Vorrichtung gemäß Anspruch 5 gelöst.

Weitere vorteilhafte Ausgestaltungen der Erfindung sind in den abhängigen Ansprüchen angegeben.

Gemäß einem ersten Aspekt ist ein Verfahren zum Ermitteln eines Erregerstroms durch eine Erregerwicklung in einer elektrischen Maschine mit einem Stator und einem Läufer vorgesehen. Die elektrische Maschine umfasst einen Erregertransformator, um durch Induzieren eines elektrischen Stroms läuferseitig den Erregerstrom hervorzurufen, mit dem eine Erregerwicklung zur Erzeugung eines Erregermagnetfelds bestromt wird. Das Verfahren umfasst die folgenden Schritte:

- primärseitiges Ansteuern des Erregertransformators, um einen Erregerstrom, der von dem in dem Erregertransformator sekundärseitig induzierten Strom abgeleitet ist, in dem Läufer zu bewirken;
- Messen eines oder mehrerer primärseitiger Phasenströme in dem Erregertransformator;
- Bestimmen eines Maximalwerts abhängig von dem einen oder den mehreren gemessenen Phasenströmen;
- Ermitteln des Erregerstroms durch die Erregerwicklung abhängig von dem ermittelten Maximalwert anhand des Kleinsignalesatzschaltbildes der elektrischen Maschne.

Eine Idee des obigen Verfahrens besteht darin, den Erregerstrom mit Hilfe einer einfachen Stromteilerberechnung abhängig von einem Maximalwert eines Phasenstroms auf Statorseite zu berechnen. Dies hat den Vorteil, dass die Messung des Maximalwerts des Phasenstroms einfach durchführbar ist, während bei Ermittlung des Erregerstroms durch eine Messung der statorseitigen Phasenströme und der verketteten Spannungen mit hoher Abtastfrequenz eine aufwendige Berechnung zur Bestimmung der Einschaltzeiten der Dioden eines im Läufer verwendeten Gleichrichters durchgeführt werden muss.

Das obige Verfahren zum Ermitteln des Erregerstromes basiert auf der Annahme, dass zu einem bestimmten Zeitpunkt der Strom immer durch zwei der Spulen der Erregerläuferwicklung verläuft, so dass für jede der Spulen der Erregerläuferwicklung die Hauptinduktanz angenommen werden kann, in denen der statorseitig fließende Phasenstrom durch transformatorische Kopplung einen Stromfluss bewirkt. Der durch die Erregerwicklung fließende Erregerstrom lässt sich folglich als Teilstrom des gesamten transformatorisch induzierten sekundärseitigen Stroms in einem Stromteiler bestimmen. Der Stromteiler weist einen ersten Strompfad durch die beiden Hauptinduktivitäten der zwei aktiven Spulen der Erregerläuferwicklung und einen zweiten Strompfad durch die Erregerwicklung auf.

Weiterhin kann das Ermitteln des Erregerstroms abhängig von einem Reduktionsfaktor des Erregertransformators, der dem Windungszahlenverhältnis einer primärseitigen Spule und einer sekundärseitigen Spule entspricht, abhängig von einem z.B. empirisch bestimmbaren, vorgegebenen Korrekturfaktor, abhängig von der Drehzahl der elektrischen Maschine und abhängig von einem Verhältnis einer Hauptinduktivität des Erregertransformators und einer Summe aus der Hauptinduktivität und Impedanz der Erregerwicklung durchgeführt werden.

Gemäß einer Ausführungsform können mehrere Phasenströme in primärseitigen Phasen gemessen werden, wobei der Maximalwert durch Mitteln der Maximalwerte der mehreren Phasenströme ermittelt wird.

Gemäß einer alternativen Ausführungsform können mehrere Phasenströme in primärseitigen Phasen gemessen werden, wobei der Maximalwert durch Gleichrichten von von den mehreren Phasenströmen abgeleiteten Strömen bzw. Spannungen in einem Brückengleichrichter und durch Bestimmen des Maximalwerts abhängig von dem gleichgerichteten Strom bzw. von der gleichgerichteten Spannung ermittelt wird.

Gemäß einem weiteren Aspekt ist eine Vorrichtung zum Ermitteln eines Erregerstroms durch eine Erregerwicklung in einer elektrischen Maschine mit einem Stator und einem Läufer vorgesehen, wobei die elektrische Maschine einen Erregertransformator umfasst, um durch Induzieren eines elektrischen Stroms läuferseitig den Erregerstrom hervorzurufen, mit dem eine Erregerwicklung zur Erzeugung eines Erregermagnetfelds bestromt wird. Die Vorrichtung umfasst:

- eine Stromerfassungseinheit zum Erfassen eines oder mehrerer Phasenströme in einer bzw. mehrerer primärseitigen Phasen des Erregertransformators;
- eine Maximalstromermittlungseinheit zum Bestimmen eines Maximalwerts abhängig von dem einen oder den mehreren gemessenen Phasenströmen;
- eine Motorsteuereinheit zum Ermitteln des Erregerstroms durch die Erregerwicklung abhängig von dem ermittelten Maximalwert anhand des Kleinsignalessatzschaltbildes der elektrischen Maschme.

Weiterhin kann eine Transformatorsteuereinheit vorgesehen sein, um die primärseitige Ansteuerung des Erregertransformators durchzuführen, wobei die Transformatoreinheit die Phasenströme konstant einstellt oder von der Motorsteuereinheit vorgegeben einstellt.

Gemäß einem berorzugten Anwendungsbeispteil ist ein Motorsystem vorgesehen. Das Motorsystem umfasst:

- die obige Vorrichtung; und
- eine elektrische Maschine mit einem Stator und mit einem Läufer, der eine Erregerwicklung aufweist, wobei die elektrische Maschine den Erregertransformator umfasst, um durch Induzieren eines elektrischen Stroms läuferseitig den Erregerstrom hervorzurufen, mit dem eine Erregerwicklung das Erregermagnetfeld erzeugt.

Weiterhin kann die elektrische Maschine einen Diodenbrückengleichrichter zum Gleichrichten der sekundärseitig im Erregertransformator erzeugten Transformatorströme aufweisen.

**Kurze Beschreibung der Zeichnungen**

Bevorzugte Ausführungsformen der Erfindung werden nachfolgend anhand der beigefügten Zeichnungen näher erläutert. Es zeigen:

Fig. 1    eine Querschnittsdarstellung einer elektrischen Maschine mit einem Erregertransformator;

Fig. 2    ein Schaltungsdiagramm zur Darstellung der elektronischen Schaltung der elektrischen Maschine der Fig. 1;

Fig. 3    ein Ersatzschaltbild für den Erregertransformator;

Fig. 4    ein Ersatzschaltbild des aktiven Schaltkreises in dem Läufer; und

Fig. 5    ein Signal-Zeit-Diagramm zur Veranschaulichung der Verläufe eines primärseitigen Phasenstroms, der Drehzahl der elektrischen Maschine, des gemessenen Erregerstroms und des berechneten Erregerstroms.

**Wege zur Ausführung der Erfindung**

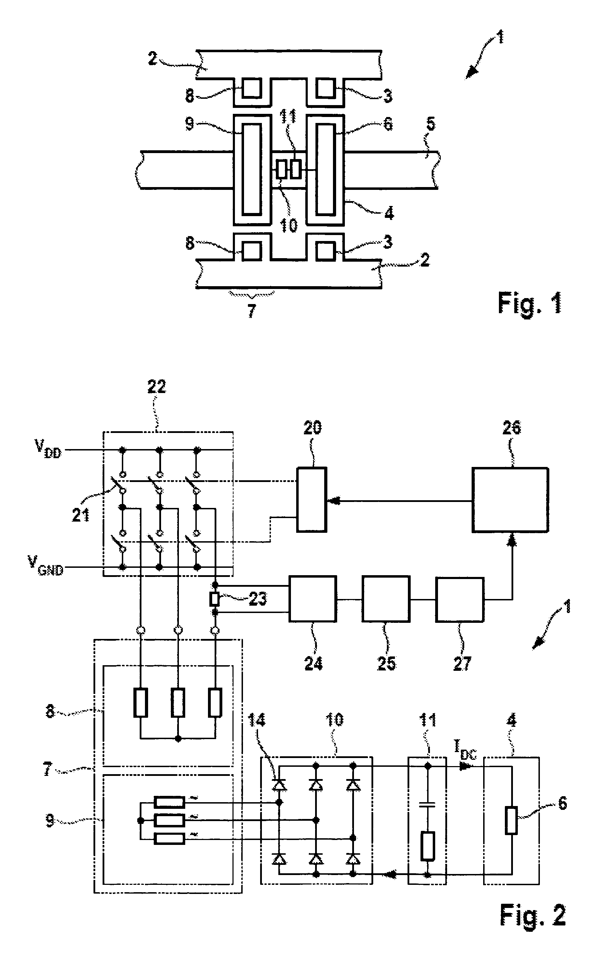

In Fig. 1 ist eine Querschnittsdarstellung einer rotatorischen, elektrischen Maschine 1, z.B. eines Elektromotors, dargestellt. Die elektrische Maschine 1 umfasst einen Stator 2 mit einer Statorwicklung 3 und einen Läufer 4 (z.B. ein Rotor bei einem rotatorischen Elektromotor), der an einer Welle 5 angebracht ist. Der Läufer 4 umfasst eine Erregerwicklung 6, um ein Erregermagnetfeld zu erzeugen. Durch Ansteuerung der Statorwicklung 3 kann die elektrische Maschine als Elektromotor betrieben werden.

An einer in axialer Richtung benachbarten Position an der Welle 5 ist ein Erregertransformator 7 angeordnet. Der Erregertransformator 7 weist eine Erregerstatorwicklung 8 an dem Stator 2 oder an einer bezüglich des Läufers 4 fixierten Position und eine Erregerläuferwicklung 9 auf, die an der rotierbaren Welle 5 angeordnet ist.

Statorwicklung 3, Läuferwicklung 6, Erregerstatorwicklung 8 und Erregerläuferwicklung 9 können jeweils Spulen aufweisen, deren Pole (nicht gezeigt) in radialer Richtung ausgerichtet sind. Die einzelnen Spulen der Erregerstatorwicklung 8 werden so angesteuert, dass sich abhängig von einer Drehzahl der Welle 5 ein umlaufendes Wechselfeld ergibt, so dass in die Spulen der Erregerläuferwicklung 9 wechselweise Strom induziert wird.

Der in den Spulen der Erregerläuferwicklung 9 induzierte Erregerstrom wird in einem Diodenbrückengleichrichter 10 gleichgerichtet. Die nachfolgende aus einer Kapazität und einem Widerstand gebildete Diodenschutzschaltung 11 dient dem Schutz des Diodenbrückengleichrichter 10. Der gleichgerichtete Erregerstrom $I_{DC}$ fließt durch die Erregerwicklung 6 des Läufers 4, um das Erregermagnetfeld zu erzeugen.

In Fig. 2 ist die elektrische Maschine 1 der Fig. 1 als elektronisches Schaltungsdiagramm dargestellt. Der Erregertransformator 2 der elektrischen Maschine 1 ist mit einer dreiphasigen Erregerstatorwicklung 8 und einer entsprechenden Erregerläuferwicklung 9 ausgebildet. Im vorliegenden Ausführungsbeispiel umfasst die Erregerstatorwicklung 3 drei in Sternschaltung verschaltete Spulen der Erregerstatorwicklung 8. Auch ist es möglich, die elektrische Maschine 1 mit einer Erregerstatorwicklung 8 mit mehr als drei Phasen auszustatten. Ferner kann vorgesehen sein, die Spulen anstelle in Sternschaltung in einer Dreieckesschaltung anzuordnen.

Weiterhin sind die Spulen der Erregerläuferwicklung 9 transformatorisch mit denen der Erregerstatorwicklung 8 gekoppelt, so dass in die Erregerläuferwicklung 8 ein Wechselstrom induziert wird. Der resultierende dreiphasige Wechselstrom wird dem Diodenbrückengleichrichter 10 zugeführt, der sechs Gleichrichterdioden 14 aufweist, die in bekannter Weise verschaltet sind. Bei mehr als drei Phasen werden für jede weitere Phase zwei weitere Gleichrichterdioden vorgesehen, um in bekannter Weise eine positive Halbwelle des Stroms auf eine der Ausgangsleitungen und eine negative Halbwelle des Stroms auf eine weitere der Ausgangsleitungen durchzulassen.

Der Erregertransformator 7 wird durch eine geeignete Ansteuerung der primärseitigen Erregerstatorwicklung 8 betrieben, so dass ein entsprechender Wechselstrom in der Erregerläuferwicklung 9 induziert wird. Die Ansteuerung der Spulen der Erregerstatorwicklung 8 erfolgt im Allgemeinen so, dass immer nur in einem Teil der Spulen der Erregerläuferwicklung 9 gleichzeitig ein Strom fließt, so dass entsprechend sekundärseitig nur in jeweils zwei der Spulen der Erregerläuferwicklung 9 ein entsprechender Strom induziert wird.

Weiterhin liefert der Ausgang des Diodenbrückengleichrichter 10 den nahezu konstanten Erregerstrom $I_{DC}$ an die Erregerwicklung 6. Die Erregerwicklung 6 dient zur Bereitstellung eines Gleichmagnetfelds. Der Erregerstrom $I_{DC}$ wird also aus dem in der Erregerläuferwicklung 9 transformatorisch erzeugten Wechselstrom durch Gleichrichten in dem Diodenbrückengleichrichter 10 erzeugt.

Weiterhin ist in Fig. 2 die Transformatorsteuereinheit 20 gezeigt, die Pull-up-Schalter 21 und Pull-down-Schalter 21 (z.B. Feldeffekttransistoren) einer mit einer Gleichspannungsquelle ($V_{DD}$, $V_{GND}$) versorgten Inverter-Endstufe 22 so ansteuert, dass immer ein Pull-up-Schalter 21 und ein Pull-down-Schalter 21 geschlossen wird, und somit einen Strompfad durch einen Teil der Spulen der Erregerstatorwicklung 8 (im vorliegenden Beispiel durch zwei der Spulen der Erregerstatorwicklung 8) definiert.

Anstelle der Inverter-Endstufe kann auch ein AC-Thyristorstellglied vorgesehen sein, bei dem jede Phase eines mehrphasigen Drehstromanschlusses über eine Thyristorschalteinheit mit einem der Phasenanschlüsse der Erregerstatorwicklung 8 verbunden ist. Durch Schalten der Thyristorschalteinheit, gesteuert durch die Transformatorsteuereinheit 20, können die einzelnen Phasen zur Bereitstellen eines sekundärseitigen Stroms ein- oder ausgeschaltet werden.

An mindestens einem der Phasenanschlüsse der Erregerstatorwicklung 8 ist ein Strommesselement 23, z.B. in Form eines Messwiderstandes (z.B. Shunt) angeordnet, um einen Phasenstromverlauf zu messen. Bei Verwendung des Messwiderstands wird eine zum zu messenden Strom proportionale Messspannung bereitgestellt, die in einer Stromerfassungseinheit 24 erfasst wird. Eine aus der Messspannung ableitbare Angabe über den Phasenstromverlauf wird entweder digital oder analog einer Maximalstromermittlungseinheit 25 bereitgestellt.

Die Maximalstromermittlungseinheit 25 ermittelt aus dem Phasenstromverlauf einen Maximalwert $I_{peak\_measure}$ des Phasenstroms $I_1$, d.h. es wird das Maximum jeder positiven Halbwelle des Phasenstroms $I_1$ bestimmt. Die Maxi-

malstromermittlungseinheit 25 stellt den Maximalwert $I_{peak\_measure}$ des Phasenstroms $I_1$ einer Erregerstromermittlungs-einheit 27 bereit.

Alternativ können die Phasenströme mehrerer oder aller Phasen erfasst werden. Die resultierenden Messströme bzw. Messspannungen können dann z.B. mit Hilfe eines primärseitigen Brückengleichrichters gleichgerichtet werden. Der gleichgerichtete Messstrom wird in der Stromerfassungseinheit 24 erfasst, so dass das Maximum des resultierenden gleichgerichteten Messstroms als Maximalwert $I_{peak\_measure}$ in der Maximalstromermittlungseinheit 25 bestimmt werden kann.

Die Erregerstromermittlungseinheit 27 ermittelt aus dem Maximalwert $I_{peak\_measure}$ des Phasenstroms $I_1$ gemäß dem nachfolgend beschriebenem Berechnungsverfahren den Erregerstrom $I_{DC}$ und stellt eine Angabe über den Erregerstrom $I_{DC}$ einer Motorsteuereinheit 26 bereit. Die Motorsteuereinheit 26 kann die Transformatorsteuereinheit 20, die die Inverter-Endstufe 22 betreibt, abhängig von dem bestimmten Erregerstrom $I_{DC}$ ansteuern, z.B. um den Erregerstrom $I_{DC}$ z.B. mit Hilfe einer geeigneten Regelung konstant zu halten oder entsprechend einer Vorgabe einzustellen.

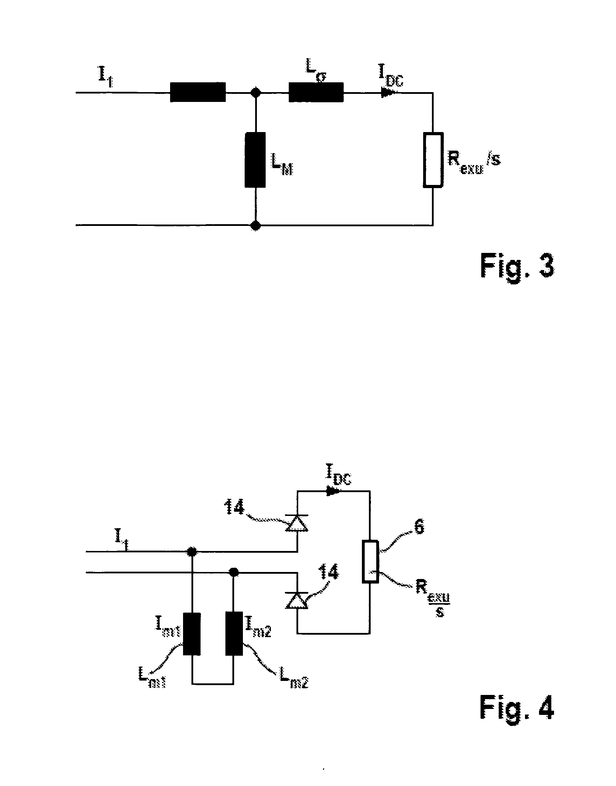

In Fig. 3 ist ein Ersatzschaltbild der Kopplung einer der Spulen der Erregerstatorwicklung 8 mit einer der Spulen der Erregerläuferwicklung 9 in einem Ersatzschaltbild dargestellt. D.h. für die transformatorische Kopplung der Erregerstatorwicklung 8 mit der Erregerläuferwicklung 9 gilt das in Fig. 3 gezeigte Ersatzschaltbild, wenn ein bestimmter Pha-senstrom $I_1$ fließt. Die Impedanz der Erregerwicklung 6 beträgt dabei $R_{exu}/s$, wobei s dem Schlupf des Läufers 4 entspricht. Der Schlupf s ermittelt sich wie folgt:

$$s = \frac{f_{supply} - n \cdot p}{f_{supply}}$$

wobei $f_{supply}$ der Frequenz des statorseitigen Phasenstroms
p der Anzahl der Polpaare des Erregertransformators 9; und
n der Drehzahl in Umdrehungen pro Sekunde entsprechen.

Das elektrische Ersatzschaltbild der Fig. 3 gilt für das Verhalten des Erregertransformators 7 für ein stationäres Dreiphasenmodell. Das Ersatzschaltbild weist als wesentliche Induktivität die Hauptinduktivität $L_M$ auf. Für die in der Erregerstromermittlungseinheit 27 durchgeführte Stromschätzung wird ein Kleinsignalersatzschaltbild verwendet. Da zu jedem bestimmten Zeitpunkt nur zwei Phasen in dem Diodenbrückengleichrichter 10 aktiv sind, müssen nur die aktiven Gleichrichterbrücken, d.h. nur die aktiven Dioden, berücksichtigt werden, so dass keine Berechnung der Phasenverschiebung notwendig ist.

Man erkennt in dem Ersatzschaltbild der Fig. 4, dass lediglich die Hauptinduktivitäten $L_M$ der Spulen der Erregerläuferwicklung 9 im Kleinsignalersatzschaltbild berücksichtigt werden und dass die Läuferstreuinduktivität $L_\sigma$ des Erregertransformators 7 nicht berücksichtigt werden muss.

In dem Ersatzschaltbild der Fig. 4 ergibt sich anhand des Stromteilers folgender Zusammenhang:

$$I_{DC,estimation} = r_{ex} \cdot k \cdot I_{peak_{measure}} \cdot \frac{Z_1}{Z_2}$$

Mit

$$Z_1 = 2 \cdot \omega L \; und \; Z_2 = \frac{R_{exu}}{s} + Z_1,$$

wobei
$L = L_{m1} = L_{m2}$ den Hauptinduktivitäten des Erregertransformators 7,
$I_{peak\_measure}$ dem Maximalwert des primärseitigen Phasenstroms $I_1$,
k einem Korrekturfaktor, der vorgegeben oder empirisch festgelegt sein kann und z.B. auf einen Wert von 1,1 festgelegt sein kann, und
$r_{ex}$ einem Reduktionsfaktor des Erregertransformators 7 (von Stator zu Läufer), der mit Hilfe des Windungsverhältnis der Spulen der Erregerstatorwicklung 8 zu den Spulen der Erregerläuferwicklung 9 ermittelt werden kann, entsprechen.

Die Erregerimpedanz $R_{exu}$ kann wie folgt ermittelt werden:

$$R_{exu} = r_{ma}^2 \cdot R_f \cdot r_{ex}^2 \cdot 3 \cdot \frac{U_{nenn}}{\sqrt{3} \cdot I_{nenn}}$$

wobei $R_f$ dem ohmschen Widerstand der Erregerwicklung 6 pro Einheit, d.h. einheitenlos, $r_{ma}$ (von Läufer zu Stator) einem Reduktionsfaktor, der sich aus dem Windungsverhältnis der Spulen der Erregerwicklung 6 zu dem der Spulen der Statorwicklung 3 ergibt,
$U_{nenn}$ der Nennspannung der elektrischen Maschine und
$I_{nenn}$ dem Nennstrom der elektrischen Maschine (entsprechend dem Datenblatt) entspricht.

Der Erregerstroms $I_{DC}$ gemäß dem obigen Zusammenhang ist einfach zu berechnen

$$I_{DC,estimation} = K \cdot I_{peak_{measure}} \cdot J(n)$$

wobei K eine bei Zugrundelegen eines physikalischen Modells rechnerisch ermittelbare oder empirisch ermittelbare Konstante darstellt und ansonsten das von der Drehzahl (über den Schlupf s) abhängige Impedanzenverhältnis $J(n)$ ebenfalls einfach bestimmbar ist. Bei geringen Drehzahlen n kann das Impedanzenverhältnis u.U. sogar als konstant angenommen werden

Letztlich ergibt sich eine funktionale Abhängigkeit des Erregerstroms $I_{DC}$ von dem Maximalwerts des primärseitigen Phasenstoms und der Drehzahl wie folgt:

$$I_{DC} = f\left(I_{peak_{measure}}, n\right)$$

Eine solche funktionale Abhängigkeit lässt sich in einfacher Weise in der Erregerstromermittlungseinheit 27 implementieren. Die Berechnung des Erregerstroms erfolgt nur entsprechend der von der Frequenz der Versorgung vorgegebenen Häufigkeit, da Maxima in den Phasenstromverläufen nur einmal während einer Schwingungsperiode auftreten. Somit können die Anforderungen an die Rechenleistung der Erregerstromermittlungseinheit 27 reduziert werden.

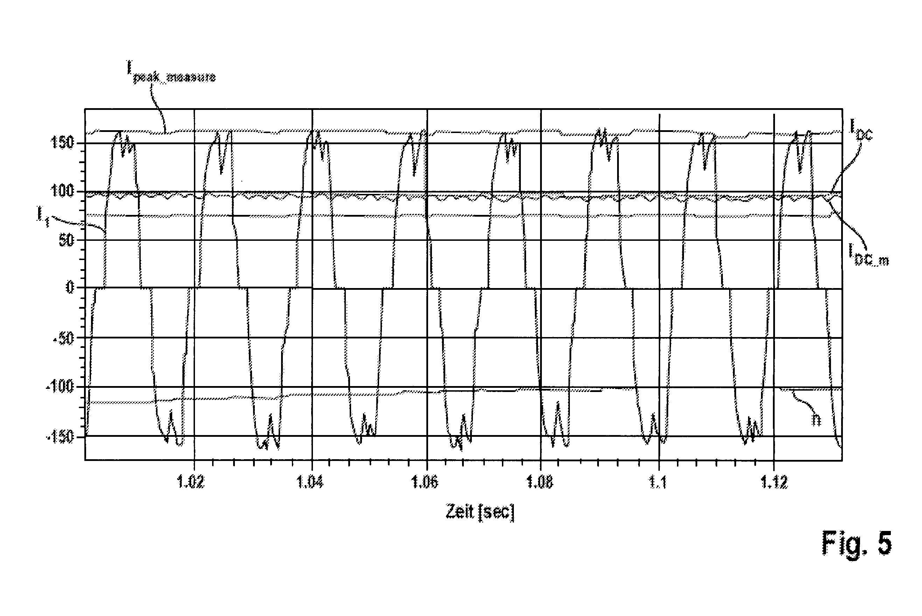

In Fig. 5 sind die Verläufe des primärseitigen Phasenstroms $I_1$, des Maximalwerts $I_{peak\_measure}$ des primärseitigen Phasenstroms $I_1$, des gemessenen Erregerstroms $I_{DC\_m}$, des berechneten Erregerstroms $I_{DC}$ sowie der Drehzahl n dargestellt. Man erkennt, dass sich der Erregerstrom $I_{DC}$ aus dem Maximalwert des primärseitigen Phasenstroms $I_1$ mit guter Genauigkeit ableiten lässt.

**Bezugszeichenliste**

1    Elektrische Maschine

2    Stator

3    Statorwicklung

4    Läufer

5    Welle

6    Erregerwicklung

7    Erregertransformator

8    Erregerstatorwicklung

9    Erregerläuferwicklung

10   Diodenbrückengleichrichter

11   Diodenschutzschaltung

14   Gleichrichterdiode

20   Transformatorsteuereinheit

21   Pull-up-Schalter bzw. Pull-down-Schalter

22   Inverter-Endstufe

23   Strommesselement

24   Stromerfassungseinheit

25   Maximalstromermittlungseinheit

26   Motorsteuereinheit

27   Erregerstromermittlungseinheit

**Patentansprüche**

1.  Verfahren zum Ermitteln eines Erregerstroms durch eine Erregerwicklung in einer elektrischen Maschine mit einem Stator (2) und einem Läufer (4), wobei die elektrische Maschine (1) einen Erregertransformator (7) umfasst, um durch Induzieren eines elektrischen Stroms läuferseitig den Erregerstrom ($I_{DC}$) hervorzurufen, mit dem eine Erregerwicklung (6) zur Erzeugung eines Erregermagnetfelds bestromt wird, **gekennzeichnet durch** folgende Schritte:

    - primärseitiges Ansteuern des Erregertransformators (7), um einen Erregerstrom ($I_{DC}$), der von dem in dem Erregertransformator (7) sekundärseitig induzierten Strom abgeleitet ist, in dem Läufer (4) zu bewirken;
    - Messen eines oder mehrerer Phasenströme in einer oder mehreren primärseitigen Phasen des Erregertransformators (7);
    - Bestimmen eines Maximalwerts ($I_{peak\_measure}$) abhängig von dem einen oder den mehreren gemessenen Phasenströmen ($I_1$);
    - Ermitteln des Erregerstroms ($I_{DC}$) **durch** die Erregerwicklung (6) abhängig von dem ermittelten Maximalwert ($I_{peak\_measure}$) anhand des Kleinsignal-essatzschaltbildes der elektrischen Maschine.

2.  Verfahren nach Anspruch 1, wobei das Ermitteln des Erregerstroms ($I_{DC}$) abhängig von einem Reduktionsfaktor des Erregertransformators (7), der durch ein Windungszahlenverhältnis einer primärseitigen Erregerstatorwicklung (8) und einer sekundärseitigen Erregerläuferwicklung (9) durchgeführt wird, abhängig von einem vorgegebenen Korrekturfaktor, und abhängig von einem Verhältnis einer Hauptinduktivität des Erregertransformators (7) und einer Summe aus Hauptinduktivität und Impedanz der Erregerwicklung (6) durchgeführt wird.

3.  Verfahren nach Anspruch 1 oder 2, wobei mehrere Phasenströme ($I_1$) in primärseitigen Phasen gemessen werden und wobei der Maximalwert ($I_{peak\_measure}$) durch Mitteln der jeweiligen Maximalwerte der mehreren Phasenströme ermittelt wird.

4.  Verfahren nach Anspruch 1 oder 2, wobei mehrere Phasenströme in primärseitigen Phasen gemessen werden und wobei der Maximalwert ($I_{peak\_measure}$) durch Gleichrichten von Strömen bzw. Spannungen, die von den mehreren Phasenströmen abgeleitet sind, in einem Brückengleichrichter und durch Bestimmen des Maximalwerts abhängig von dem gleichgerichteten Strom bzw. von der gleichgerich-teten Spannung ermittelt wird.

5. Vorrichtung zum Ermitteln eines Erregerstroms ($I_{DC}$) durch eine Erregerwicklung (6) in einer elektrischen Maschine (1) mit einem Stator (2) und einem Läufer (4), wobei die elektrische Maschine (1) einen Erregertransformator (7) umfasst, um durch Induzieren eines elektrischen Stroms läuferseitig den Erregerstrom ($I_{DC}$) hervorzurufen, mit dem eine Erregerwicklung (6) zur Erzeugung eines Erregermagnetfelds bestromt wird, wobei die Vorrichtung **dadurch gekennzeichnet ist, dass** sie folgende Funktions einheiten umfasst: eine Einrichtung zum primärseitigen Ansteuern des Erregertransformators (7), um einen Erregerstrom ($I_{DC}$), der von dem in dem Erregertransformator (7) sekundärseitig induzierten Strom abgeleitet ist, in dem Läufer (4) zu bewirken;

   - eine Stromerfassungseinheit (24) zum Messen eines oder mehrerer Phasenströme ($I_1$) in einer oder mehreren primärseitigen Phasen des Erregertransformators (7);
   - eine Maximalstromermittlungseinheit (25) zum Bestimmen eines Maximalwerts ($I_{peak\_measure}$) abhängig von dem einen oder den mehreren gemessenen Phasenströmen ($I_1$);
   - eine Motorsteuereinheit (26) zum Ermitteln des Erregerstroms ($I_{DC}$) durch die Erregerwicklung (6) abhängig von dem ermittelten Maximalwert ($I_{peak\_measure}$) anhand des Kleinsignalessatzschaltbildes der elektrischen Maschine.

6. Vorrichtung nach Anspruch 4, wobei eine Transformatorsteuereinheit (20) vorgesehen ist, um die primärseitige Ansteuerung des Erregertransformators (7) durchzuführen, wobei die Transformatorsteuereinheit (20) effektive Phasenströme konstant einstellt oder von der Motorsteuereinheit (26) vorgegeben einstellt.

7. Motorsystem, umfassend:

   - eine Vorrichtung nach Anspruch 5 oder 6; und
   - eine elektrische Maschine (1) mit einem Stator (2) und mit einem Läufer (4), der eine Erregerwicklung (6) aufweist, wobei die elektrische Maschine (1) den Erregertransformator (7) umfasst, um durch Induzieren eines elektrischen Stroms läuferseitig den Erregerstrom ($I_{DC}$) hervorzurufen, mit dem eine Erregerwicklung (6) das Erregermagnetfeld erzeugt.

8. Motorsystem nach Anspruch 7,
   wobei die elektrische Maschine einen Diodenbrückengleichrichter (10) zum Gleichrichten der sekundärseitig im Erregertransformator (7) erzeugten Transformatorströme aufweist.

**Claims**

1. Method for determining a field current through a field wingding in an electrical machine with a stator (2) and a rotor (4), wherein the electrical machine (1) comprises a field-circuit transformer (7) in order to bring about, by induction of an electrical current on the rotor side, the field current ($I_{DC}$) with which a field wingding (6) is energized in order to generate an excitation magnetic field, **characterized by** the following steps:

   - primary-side driving of the field-circuit transformer (7) in order to bring about a field current ($I_{DC}$), which is derived from the current induced on the secondary side in the field-circuit transformer (7), in the rotor (4);
   - measurement of one or more phase currents in one or more primary-side phases of the field-circuit transformer (7);
   - determination of a maximum value ($Ip_{eak\_measure}$) depending on the one or more measured phase currents ($I_1$) ;
   - determination of the field current ($I_{DC}$) through the field wingding (6) depending on the maximum value ($I_{peak\_}$measure) determined using the low-level signal equivalent circuit diagram of the electrical machine.

2. Method according to Claim 1, wherein the determination of the field current ($I_{DC}$) is performed depending on a reduction factor of the field-circuit transformer (7), which is carried out by a turns ratio of a primary-side stator field wingding (8) and a secondary-side rotor field wingding (9), depending on a predetermined correction factor, and depending on a ratio of a magnetizing inductance of the field-circuit transformer (7) and a sum of the magnetizing inductance and the impedance of the field wingding (6).

3. Method according to Claim 1 or 2, wherein a plurality of phase currents ($I_1$) is measured in primary-side phases, and wherein the maximum value ($I_{peak\_measur}$e) is determined by averaging the respective maximum values of the plurality of phase currents.

**4.** Method according to Claim 1 or 2, wherein a plurality of phase currents is measured in primary-side phases, and wherein the maximum value ($Ip_{eak\_measure}$) is determined by rectification of currents and voltages, which are derived from the plurality of phase currents, in a bridge rectifier and by determination of the maximum value depending on the rectified current and the rectified voltage, respectively.

**5.** Apparatus for determining a field current ($I_{DC}$) through a field wingding (6) in an electrical machine (1) with a stator (2) and a rotor (4), wherein the electrical machine (1) comprises a field-circuit transformer (7) in order to bring about, by induction of an electrical current on the rotor side, the field current ($I_{DC}$) with which a field wingding (6) is energized in order to generate an excitation magnetic field, wherein the apparatus is **characterized in that** it comprises the following functional units:

- a device for primary-side driving of the field-circuit transformer (7) in order to bring about a field current ($I_{DC}$), which is derived from the current induced on the secondary side in the field-circuit transformer (7), in the rotor (4);
- a current detection unit (24) for measuring one or more phase currents ($I_1$) in one or more primary-side phases of the field-circuit transformer (7);
- a maximum current determination unit (25) for determining a maximum value ($Ip_{eak\_measure}$) depending on the one or more measured phase currents ($I_1$);
- a motor control unit (26) for determining the field current ($I_{DC}$) through the field wingding (6) depending on the maximum value ($Ip_{eak\_measure}$) determined using the low-level signal equivalent circuit diagram of the electrical machine.

**6.** Apparatus according to Claim 4, wherein a transformer control unit (20) is provided in order to perform the primary-side driving of the field-circuit transformer (7), the transformer control unit (20) setting rms phase currents to be constant or to be prescribed by the motor control unit (26).

**7.** Motor system, comprising

- an apparatus according to Claim 5 or 6; and
- an electrical machine (1) with a stator (2) and with a rotor (4), which has a field wingding (6), the electrical machine (1) comprising the field-circuit transformer (7) in order to bring about, by induction of an electrical current on the rotor side, the field current ($I_{DC}$) with which a field winding (6) generates the excitation magnetic field.

**8.** Motor system according to Claim 7, wherein the electrical machine has a diode bridge rectifier (10) for rectifying the transformer currents generated on the secondary side in the field-circuit transformer (7).

**Revendications**

**1.** Procédé pour déterminer un courant d'excitateur à travers un enroulement excitateur dans une machine électrique comprenant un stator (2) et un rotor (4), la machine électrique (1) comprenant un transformateur excitateur (7) pour produire le courant d'excitateur ($I_{DC}$) en induisant un courant électrique du côté du rotor, avec lequel un enroulement excitateur (6) est parcouru par un courant pour générer un champ magnétique d'excitateur, **caractérisé par** les étapes suivantes :

- commande du côté primaire du transformateur excitateur (7) afin de produire dans le rotor (4) un courant d'excitateur ($I_{DC}$) qui est dérivé du courant induit du côté secondaire dans le transformateur excitateur (7) ;
- mesure d'un ou de plusieurs courants de phase dans une ou plusieurs phases côté primaire du transformateur excitateur (7) ;
- détermination d'une valeur maximale ($Ip_{eak\_measure}$) en fonction du ou des plusieurs courants de phase ($I_1$) mesurés ;
- détermination du courant d'excitateur ($I_{DC}$) à travers l'enroulement excitateur (6) en fonction de la valeur maximale ($Ip_{eak\_measure}$) déterminée au moyen du schéma équivalent de faible signal de la machine électrique.

**2.** Procédé selon la revendication 1, dans lequel la détermination du courant d'excitateur ($I_{DC}$) est effectuée en fonction d'un facteur de réduction du transformateur excitateur (7), lequel est effectué par un rapport du nombre de spires entre un enroulement côté primaire de stator excitateur (8) et un enroulement côté secondaire de stator excitateur (9), en fonction d'un facteur de correction prédéfini et en fonction d'un rapport entre une inductance principale du transformateur excitateur (7) et une somme de l'inductance principale et de l'impédance de l'enroulement excitateur (6).

**3.** Procédé selon la revendication 1 ou 2, dans lequel plusieurs courants de phase ($I_1$) sont mesurés dans les phases côté primaire et dans lequel la valeur maximale ($Ip_{eak\_measure}$) est déterminée en calculant la moyenne des valeurs maximales respectives des plusieurs courants de phase.

**4.** Procédé selon la revendication 1 ou 2, dans lequel plusieurs courants de phase sont mesurés dans les phases côté primaire et dans lequel la valeur maximale ($I_{peak\_measure}$) est déterminée en redressant les courants ou les tensions, qui sont dérivés des plusieurs courants de phase, dans un redresseur en pont et en déterminant la valeur maximale en fonction du courant redressé ou de la tension redressée.

**5.** Dispositif pour déterminer un courant d'excitateur ($I_{DC}$) à travers un enroulement excitateur (6) dans une machine électrique (1) comprenant un stator (2) et un rotor (4), la machine électrique (1) comprenant un transformateur excitateur (7) pour produire le courant d'excitateur ($I_{DC}$) en induisant un courant électrique du côté du rotor, avec lequel un enroulement excitateur (6) est parcouru par un courant pour générer un champ magnétique d'excitateur, le dispositif étant **caractérisé en ce qu'**il comprend les unités fonctionnelles suivantes :

- un dispositif de commande du côté primaire du transformateur excitateur (7) afin de produire dans le rotor (4) un courant d'excitateur ($I_{DC}$) qui est dérivé du courant induit du côté secondaire dans le transformateur excitateur (7) ;
- une unité d'acquisition du courant (24) pour mesurer un ou plusieurs courants de phase ($I_1$) dans une ou plusieurs phases côté primaire du transformateur excitateur (7) ;
- une unité de détermination du courant maximum (25) pour déterminer une valeur maximale ($I_{peak\_measure}$) en fonction du ou des plusieurs courants de phase ($I_1$) mesurés ;
- une unité de commande de moteur (26) pour déterminer le courant d'excitateur ($I_{DC}$) à travers l'enroulement excitateur (6) en fonction de la valeur maximale ($Ip_{eak\_measure}$) déterminée au moyen du schéma équivalent de faible signal de la machine électrique.

**6.** Dispositif selon la revendication 4, une unité de commande de transformateur (20) étant prévue pour réaliser la commande côté primaire du transformateur excitateur (7), l'unité de commande de transformateur (20) réglant des courants de phase effectifs constants ou les réglant aux valeurs prédéfinies par l'unité de commande de moteur (26).

**7.** Système à moteur comprenant :

- un dispositif selon la revendication 5 ou 6 ; et
- une machine électrique (1) comprenant un stator (2) et comprenant un rotor (4), lequel présente un enroulement excitateur (6), la machine électrique (1) comprenant le transformateur excitateur (7) afin de produire, en induisant un courant électrique du côté du rotor, le courant d'excitateur ($I_{DC}$) avec lequel un enroulement excitateur (6) génère le champ magnétique d'excitateur.

**8.** Système à moteur selon la revendication 7, dans lequel la machine électrique présente un redresseur en pont à diodes (10) pour redresser les courants de transformateur générés du côté secondaire dans le transformateur excitateur (7).

Fig. 1

Fig. 2

Fig. 3

Fig. 4

Fig. 5

EP 2 186 188 B1

**EP 2 186 188 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 4058799 A
- WO 2004082105 A1